# EUROPÄISCHE PATENTSCHRIFT

(11) **EP 1 658 444 B1**
(45) Veröffentlichungstag und Bekanntmachung des Hinweises auf die Patenterteilung: **22.09.2010**
(21) Anmeldenummer: 04741148.3
(22) Anmeldetag: 20.07.2004
(51) Int. Cl.: F16C 33/78

(54) **ABDICHTUNG F R EIN W LZLAGER**
SEAL FOR AN ANTIFRICTION BEARING
JOINT POUR PALIER A ROULEMENT

(30) Priorität: 08.08.2003 DE 10336341
(43) Veröffentlichungstag der Anmeldung: 24.05.2006
(73) Patentinhaber: Schaeffler Technologies GmbH & Co. KG, 91074 Herzogenaurach (DE)
(72) Erfinder: SCHENK, Rainer, 90766 Fürth (DE); NICOLA, Bernard, F-67110 Reichshoffen (FR); FICKERT, Thomas, 91555 Feuchtwangen (DE); KRUHOEFFER, Wolfram, 91086 Aurachtal (DE); PESCHKE, Harald, 90587 Veitsbronn (DE)
(86) Internationale Anmeldenummer: PCT/EP2004/008067
(87) Internationale Veröffentlichungsnummer: WO 2005/017379

(56) Entgegenhaltungen:
- EP-A- 0 725 224
- WO-A-03/025409
- FR-A- 2 712 647
- US-A- 5 133 609

## Beschreibung

### Gebiet der Erfindung

Die vorliegende Erfindung bezieht sich auf eine Wälzlager-Abdichtung, umfassend eine mit einem äußeren Lagerring oder einem Gehäuse umlaufende elastische Dichtscheibe. Die zumindest bereichsweise eine Armierung aufweisende Dichtscheibe ist formschlüssig in eine Aufnahme des äußeren Lagerrings eingesetzt und bildet innenseitig eine biegeweiche Dichtlippe, die in einen Freistich des inneren Lagerrings eingreift. Dazu ist die Dichtlippe mit einer Dichtkante versehen, die im eingebauten Zustand an einer Wandung des Freistichs axial abgestützt ist.

Aus der Patentschrift DE 18 01 894 C3 ist ein Dichtungskonzept bekannt, das Dichtscheiben mit unterschiedtichen Dichtlippenanordnungen einschließt. Allen Ausführungsbeispielen gemeinsam ist eine Dichtscheibe, die mit einer ersten Dichtlippe an der inneren Wandung des Freistichs axial abgestützt ist. Eine weitere Dichtlippe ist unter Einhaltung eines Ringspaltes, d. h. spielbehaftet, einem axial dem Freistich vorgelagerten, zylindrischen Abschnitt des inneren Lagerrings zugeordnet. Dieser Abdichtungsaufbau ermöglicht im Stillstand des Wälzlagers den Eintritt von Verunreinigungen über die spielbehaftet, vorgelagerte Dichtlippe in den Freistich des inneren Lagerrings. lim Betriebszustand des Wälzlagers besteht die Gefahr, dass die Verunreinigungen sich in die Abdichtzone zwischen der Dichtkante der inneren Dichtlippe verlagern und dabei die Abdichtzone überwinden und in das Innere des Wälzlagers eintreten. Die Gestaltung der bekannten Abdichtung besitzt weiterhin den Nachteil, dass mit zunehmender Drehzahl die schleifende innere Dichtlippe mit einer vergrößerten Anpresskraft sich axial an der Wandung des Freistichs abstützt. Damit vergrößert sich nachteilig die Reibung zwischen der Dichtlippe und dem Lagerring, verbunden mit einer vergrößerten Erwärmung des Wälzlagers. Hohe Lagertemperaturen führen zu einem Schmierstoffveriustes, der sich unmittelbar auf die Wälzlager-Gebrauchsdauer auswirkt.

Die US 5,133,609 A zeigt eine drei Dichtlippen umfassende Wälzlager-Abdichtung. Die mittlere Dichtlippe greift dabei in einen umlaufenden Freistich des Wälzlager-Innenrings ein und ist an einer äußeren Wandung abgestützt. Die innere Dichtlippe bildet dabei eine Fortsetzung eines axial gestuften Abschnitts der Armierung bzw. der Dichtscheibe. Dabei ist die mittlere DichtliDee von dem Dichtlippenfuß ausgehend über die gesamte Längserstreckung mit einer aleichbleibenden Dicke versehen.

Die EP 0 725 224 A zeigt ein Wälzlager, bei dem die Abdichtung nur eine Dichtlippe umfasst, die in einem Freistichs großflächig an einer Wandung abgestützt ist. Das freie Ende der Dichtlippe ist versehen mit radial eingebrachten umfangsverteilten Nuten. Zur Anpassung der Dichtlippe an die Formgebung dos Freistichs weist die Dichtlippe einen zur Lageraußenseite gerichteten der gerundeten Form des Freistichs angepassten Ansatz auf.

### Zusammenfassung der Erfindung

Die Nachteile der bekannten Lösung berücksichtigend, liegt der Erfindung die Aufgabe zu Grunde, eine Abdichtung für ein Wälzlager zu schaffen, mit dem eine drehzahlabhängige Vorspannung von Dichtlippen erzielbar ist.

Die erfindungsgemäße Abdichtung umfasst zwei Dichtlippen. Dabei ist eine erste äußere Dichtlippe kraftschlüssig an der nach außen gerichteten Wandung des Freistichs abgestützt. Eine zweite, auch als ein Dichtungssporn zu bezeichnende Dichtlippe ist spielbehaftet, d. h. unter Einhaltung eines Dichtspaltes, der inneren Wandung des Freistichs zugeordnet. Der Aufbau der erfindungsgemäßen Abdichtung sieht weiterhin vor, dass in der Einbaulage beider Dichtungen sich ein axialer Versatz zwischen der Stirnseite der Dichtscheibe und der Dichtkante der ersten Dichtlippe einstellt.

Zur Lösung der Problemstellung ist gemäß der Erfindung eine Abdichtung vorgesehen, bei dem die äußere Dichtlippe schleifend und damit kraftschlüssig an der äußeren Wandung des Freistichs anliegt. Dieses Konzept der erfindungsgemäßen Abdichtung vermeidet wirksam den Eintritt von Verunreinigungen in den Freistich und damit in das Innere des Wälzlagers. Weiterhin ermöglicht die konstruktive Ausgestaltung der Dichtlippe eine fliehkraftgeregelte, vorgespannte Abstützung der äußeren Dichtlippe an der Wandung des Freistichs. Diese Wirkungsweise ist erzielbar, indem die gemeinsam mit dem äußeren Lagerring des Wälzlagers rotierende Dichtscheibe sich mit zunehmender Drehzahl so verlagert, dass sich eine gewünschte verringerte Kontaktpressung zwischen der Dichtkante der Dichtscheibe und der Wandung des Freistichs einstellt. In vorteilhafter Weise verringert sich dabei die Reibleistung, die eine nachteilige Lagererwärmung vermeidet, verbunden mit einem Schmierstoffverlust, der zu einem vorzeitigen Ausfall des Wälzlagers führt und die Lebensdauer des Wälzlagers reduziert.

Zur Erzielung einer vergrößerten Masse der äußeren Dichtlippe ist diese außenseitig, auf der zur zweiten Dichtlippe gewandten Seite mit einer Wulst versehen. In der Einbaulage der Abdichtung unterstützt die Wulst den fliehkraftbedingten Effekt, mit dem die Abstützkraft der äußeren Dichtlippe an der Wandung mit zunehmender Drehzahl reduziert werden kann.

Die erfindungsgemäße Wirkungsweise, die eine gewünschte fliehkraftgeregelte Vorspannung von Dichtlippen sicherstellt wird durch einen axialen Versatz zwischen der Stirnseite der Dichtscheibe und der Dichtkante der ersten Dichtlippe erzielt. Erfindungsgemäß sind die Dichtlippen der Abdichtung in der Einbaulage so angeordnet, dass sich eine radiale von der Dichtscheibe bestimmte Stützlinie einstellt, wobei sich für die erste Dichtung ein von der Stützlinie axial versetzter Massenschwerpunkt einstellt. Die in dem Massenschwerpunkt angreifende Fliehkraft löst eine im Uhrzeigersinn wirkende Kraftkomponente aus. Diese Wirkungsweise begünstigt die gewünschte mit zunehmender Drehzahl reduzierte Kontaktpressung zwischen der Dichtkante der Dichtlippe und der Wandung des Freistichs. Als eine unterstützende Maßnahme ist dazu die zweite Dichtlippe von der Armierung der Dichtscheibe ausgehend, schräg geneigt zur inneren Wandung des Freistichs ausgerichtet. Dieses Konzept begünstigt im Betriebszustand, bei rotierender Dichtscheibe, eine kontinuierliche Weiterleitung des auf die Innenseite der zweiten Dichtlippe auftreffenden Schmierstoffs an den rotierenden Außenring des Wälzlagers.

Durch eine entsprechende Ausrichtung und Dimensionierung der Dichtlippen kann empirisch ein Drehzahlbereich für das Wälzlager definiert werden, bei dem keine bzw. eine äußerst geringe Kontaktpressung entsteht. Beispielsweise kann die Dichtlippe so konzipiert werden, dass für ein Drehzahlniveau größer als 10.000 Umdrehungen Minute die Dichtlippe nahezu kontaktlos der Freistichwandung zugeordnet ist, und folglich von der Dichtung keine nachteilige Erwärmung des Wälzlagers ausgeht.

Vorteilhafte Ausgestaltungen der Erfindung sind Gegenstand der abhängigen Ansprüche 2 bis 14.

Eine vorteilhafte Ausgestaltung der Erfindung sieht eine Abstimmung eines Schulterdurchmessers des inneren Lagerrings mit einem Innendurchmesser der zweiten Dichtlippe vor. Vorteilhaft ist der Innendurchmesser der als Dichtungsspom gestalteten zweiten Dichtlippe kleiner als der Schulterdurchmesser des inneren Lagerrings. Dieses Konstruktionsprinzip bewirkt, dass aus dem Wälzkontakt zwischen dem Wälzkörper und dem Innenring des Wälzlagers axial verdrängte Schmierstoff unmittelbar von der Außenkontur bzw. der Schulter des Innenrings auf die Innenseite der zweiten Dichtlippe geleitet wird. Daraus stellt sich eine gewünschte Zirkulation des Schmierstoffs von dem Innenring zu dem Außenring ein. Von dem Außenring wird der Schmierstoff erneut von den Wälzkörpern aufgenommen, wodurch sich ein gewünschter, optimaler Kreislauf des Schmierstoffs im Wälzlager einstellt.

Die Auslegung der zweiten Dichtlippe erfolgt so, dass sich selbst bei einer maximalen Wälzlagerdrehzahl ein axiales Abstandsmaß "a" größer 0 zwischen der inneren Wandung des Freistichs und dem freien Ende der zweiten Dichtlippe einstellt. Damit wird ein nachteiliger Dichtlippenkontakt zwischen der zweiten Dichtlippe und dem inneren Lagerring vermieden.

Zur Unterstützung der fliehkraftgeregelten Dichtlippenvorspannung ist die in der Dichtscheibe integrierte Armierung an dem zum inneren Lagerring gerichteten Ende mit einer Abwinkelung, einem Schenkel versehen, die in Richtung des Freistichs schräg geneigt ausgerichtet ist. Die sich daran anschließenden von dem gemeinsamen Dichtlippenfuß ausgehenden Dichtlippen begünstigen einen axialen Versatz zu der von der Dichtscheibe bestimmten Stützlinie. Dieses Konzept verstärkt bei einsetzender Fliehkraft den Effekt, dass die Abstützkraft, mit der die erste Dichtlippe an der Wandung des inneren Lagerring anliegt, mit zunehmender Drehzahl abnimmt.

Weiterhin sieht die Erfindung vor, dass in der Einbaulage der Abdichtung die Dichtkante der ersten, äußeren Dichtlippe gegenüber der Stirnseite der Dichtscheibe axial nach innen versetzt ist. Diese Gestaltung ermöglicht einerseits eine axiale Abstützung der Dichtlippe an der äußeren Wandung des Freistichs. Andererseits begünstigt dieser Versatz die gewünschte abnehmende Vorspannung in Abhängigkeit der Drehzahl, mit der die Dichtlippe an der Freistichwandung anliegt.

Die erfindungsgemäße Abdichtung sieht weiterhin einen definierten axialen Versatz zwischen den beiden Dichtlippen in der Einbaulage vor. Der Versatz ist so dimensioniert, dass sich einerseits eine unterschiedliche fliehkraftbedingte Verlagerung der Dichtlippen zueinander einstellt, wobei es gleichzeitig zu keiner nachteiligen Beeinflussung der Dichtlippen kommt. Eine unterschiedliche Verlagerung der Dichtlippen kann beispielsweise mittels voneinander abweichenden Wandstärken der Dichtlippen realisiert werden.

Ein weiteres Gestaltungsmerkmal der erfindungsgemäßen Abdichtung sieht vor, die Wandungshöhen des Freistichs unterschiedlich zu gestalten. Ein bevorzugtes Konzept sieht vor, die von der Schulterhöhe des inneren Lagerrings bestimmte Höhe der inneren Freistichwandung so auszulegen, dass diese sowohl den Innendurchmesser der zweiten Dichtlippe als auch den Durchmesser eines Abschnitts des inneren Lagerrings übertrifft, welcher sich zwischen dem Freistich und der Stirnseite des inneren Lagerrings einstellt. Ein solcher Aufbau ermöglicht eine einfache zerstörungsfreie Montage der Abdichtung, insbesondere der inneren Dichtlippe, da diese bei einer axialen Zuführung der Abdichtung in das Wälzlager nicht mit dem inneren Lagerring in Berührung tritt. Die Differenzhöhe zwischen den Freistichwandungen ist so gewählt, dass auch die biegeweiche äußere Dichtlippe zerstörungsfrei, beispielsweise mit Hilfe eines Werkzeugs in den Freistich einsetzbar ist.

Eine weitere vorteilhafte Ausgestaltung der äußeren Dichtlippe bezieht sich auf die Gestaltung der Dichtkante. Zur Vermeidung eines Überdruckzustandes bzw. zum Ausgleich von Druckdifferenzen zwischen dem Innenraum und der äußeren Umgebung des Wälzlagers, ist im Bereich der Dichtkante eine Entlüftungsnut vorgesehen. Die Dimensionierung der radial oder geneigt in die Dichtlippe im Bereich der Dichtkante eingebrachte Entlüftungsnut vermeidet einerseits einen nachteiligen Eintritt von Flüssigkeit oder Verunreinigungen in den Innenraum des Wälzlagers und gleichzeitig einen Schmierstoffaustritt aus dem Wälzlager. Bedarfsabhängig schließt die Erfindung weiterhin die Anordnung von mehreren eventuell kleineren umfangsverteilt angeordneten Entlüftungsnuten ein.

Die erfindungsgemäße Abdichtung ist beispielsweise für ein Wälzlager einsetzbar, das in einer Spannrolle oder einer Umlenkrolle eines Zugmitteltriebs vorgesehen ist. Zur Bauteiloptimierung bietet es sich an, die erfindungsgemäße Abdichtung unmittelbar einer Laufscheibe der Spannrolle oder der Umlenkrolle zuzuordnen. Dazu ist die Dichtscheibe drehstarr mit der an einem Zugmittel abgestützten Laufscheibe verbunden, die gleichzeitig die Funktion des äußeren rotierenden Lagerrings des Wälzlagers übernimmt.

Die Erfindung ist weiterhin auf ein Wälzlager einer Spannrolle oder einer Umlenkrolle übertragbar, bei der ein Aufnahmebolzen oder Tragkörper gleichzeitig die Funktion des inneren Lagerrings ausübt. Der im eingebauten Zustand drehstarre Aufnahmebolzen oder Tragkörper ist dazu mit einem Freistich versehen zur Aufnahme der Dichtlippen der erfindungsgemäßen Abdichtung.

Die ausreichende Festigkeit bzw. Steifigkeit der Abdichtung wird mittels einer Armierung erzielt, die weitestgehend scheibenartig gestaltet, sich über einen großen Abschnitt des kreisringförmigen Abstandes zwischen dem inneren und dem äußeren Lagerring des Wälzlagers erstreckt. Die zumindest außenseitig von dem Dichtwerkstoff der Abdichtung umspritzte Armierung bildet erfindungsgemäß außenseitig eine rechtwinklige Abkantung im Bereich der am Lageraußenring vorgesehenen Befestigung. An dem zu den Dichtlippen gerichteten Innenumfang ist die Armierung mit einem schräg in Richtung des Freistichs gerichteten Schenkel versehen, der allseitig vom Dichtwerkstoff umspritzt ist und an den sich unmittelbar der Dichtlippenfuß anschließt.

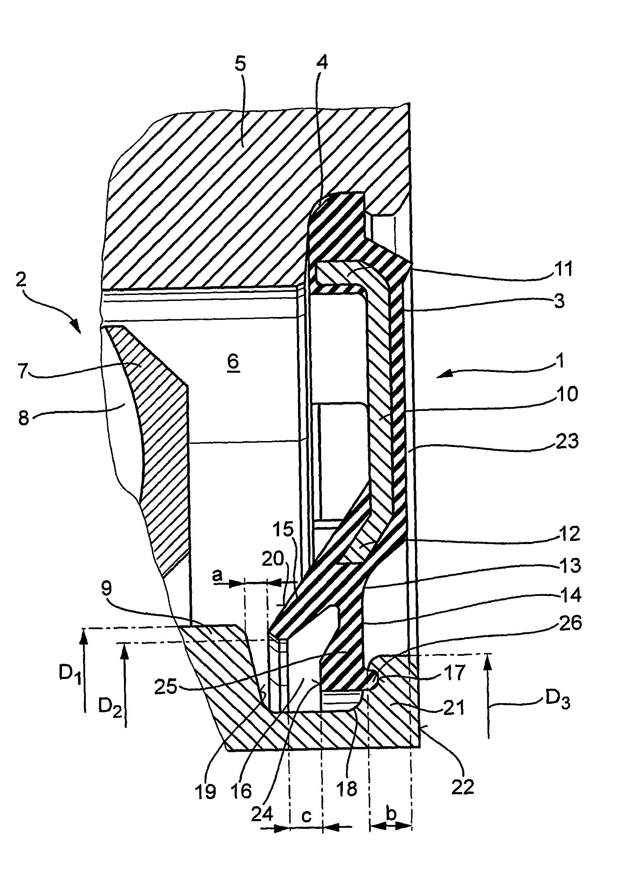

### Kurze Beschreibung der Zeichnung

Die Erfindung wird anhand einer Figur dargestellt, aus der die erfindungsgemäße Abdichtung im eingebauten Zustand ersichtlich ist.

### Detaillierte Beschreibung der Zeichnung

In der einzigen Figur ist der Aufbau einer erfindungsgemäßen Abdichtung 1 für ein Wälzlager 2 im eingebauten Zustand dargestellt. Die Abdichtung 1 umfasst eine Dichtscheibe 3, die an einem Außenumfang elastisch in eine Ringnut 4 eines äußeren umlaufenden Lagerrings 5 formschlüssig lagefixiert ist. Die mit dem Lagerring 5 umlaufende Dichtscheibe 3 schließt einen kreisringförmigen Einbauraum 6 des Wälzlagers 2, in dem in einem Wälzkörperkäfig 7 geführte Wälzkörper 8 eingesetzt sind, die in Laufbahnen des äußeren Lagerrings 5 und eines inneren Lagerrings 9 geführt sind. Die aus einem elastischen Dichtwerkstoff hergestellte Dichtscheibe 3 ist zur Versteifung mit einer Armierung 10 versehen, die scheibenartig gestaltet ist. In Richtung des äußeren Lagerrings 5 bildet die Armierung 10 einen rechtwinklig abgekanteten Bord 11. In Richtung des inneren Lagerrings 9 schließt die Armierung 10 einen nach innen geneigten Schenkel 12.

Übereinstimmend ist der Bord 11 und der Schenkel 12 vollständig von dem Dichtwerkstoff der Dichtscheibe 3 umspritzt. An dem freien Ende des Schenkels 12 schließt sich ein aus dem Dichtwerkstoff gebildeter Dichtlippenfuß 13 an. Der Dichtlippenfuß 13 bildet die Basis für zwei Dichtlippen 14, 15, die einem in dem inneren Lagerring 9 eingebrachten Freistich 16 zugeordnet sind. Die Dichtlippe 14 stützt sich über eine Dichtkante 17 an einer nahezu radial ausgerichteten äußeren Wandung 18 des Freistichs 16 ab. Die weitere Dichtlippe 15 ist in Verlängerung des Schenkels 12 der Armierung 10 verlaufend in Richtung der inneren Wandung 19 des Freistichs 16 ausgerichtet. Im eingebauten Zustand ist das freie Ende der Dichtlippe 15 bis auf ein Abstandsmaß "a" an die innere Wandung 19 geführt.

Weitere Gestaltungsmerkmale des inneren Lagerrings 9 in Verbindung mit den Dichtlippen 14, 15 beziehen sich auf Durchmesserverhältnisse sowie auf axiale Abstände. Ein Schulterdurchmesser "D₁" des inneren Lagerrings 9 übertrifft maßlich den Innendurchmesser "D₂ der als Dichtungssporn ausgebildeten inneren Dichtlippe 15. Diese konstruktive Auslegung gewährleistet, dass vom Wälzkontakt zwischen dem Wälzkörper 8 und dem inneren Lagerring 9 verdrängter Schmierstoff axial von dem Lagerring 9 auf eine Innenseite 20 der Dichtlippe 15 geleitet wird. Von der rotierenden Dichtscheibe 3 und der damit In Verbindung stehenden Dichtlippe 15 wird der Schmierstoff fliehkraftbedingt an die Innenseite des äußeren Lagerrings 5 gefördert wird, bevor es wieder zu den Wälzkörpern 8 gelangt.

Die Wandungen 18, 19, welche den Freistich 15 axial begrenzen, besitzen unterschiedliche Wandungshöhen. Das Maß der inneren Wandung 19 bestimmt der Schulterdurchmesser "D₁", wobei dieser Durchmesser den Durchmesser eines radial gestuften Abschnitts 21 übertrifft, der sich zwischen dem Freistich 16 und einer Stirnseite 22 des inneren Lagerrings 9 einstellt. Die Dichtkante 17 ist im eingebauten Zustand axial versetzt, gekennzeichnet durch das Maß "b", welches sich zwischen der Stirnseite 23 der Dichtscheibe 3 und der Kontaktfläche der Dichtkante 17 an der äußeren Wandung 18 einstellt. Die zueinander gespreizt angeordneten Dichtlippen 14, 15 bilden ein Abstandsmaß "c", das so gewählt ist, dass zum einen eine ungehinderte, zerstörungsfreie Montage der Dichtscheibe 3 sichergestellt ist und zum anderen die Dichtlippen 14, 15 sich im eingebauten Zustand nicht gegenseitig behindern. Die Dichtlippe 14 weist auf der von der Dichtkante 17 abgewandten Seite außenseitig eine Wulst 24 auf, mit der bewusst eine vergrößerte Masse der Dichtlippe 14 im Außenbereich erzielbar ist. Die Wulst 24 vergrößert die Masse der Dichtlippe 14 in der Außenzone. Dabei stellt sich ein Massenschwerpunkt 25 ein, der zu einer radialen, durch die Dichtscheibe 3 gebildeten Stützlinie axial versetzt angeordnet ist. Mit zunehmender Drehzahl des Wälzlagers, d. h. rotierendem äußeren Lagerring 5 in Verbindung mit der Dichtscheibe 3 und den zugehörigen Dichtlippen 14, 15 löst die im Massenschwerpunkt 25 angreifende Fliehkraft eine gemäß Pfeilrichtung, im Uhrzeigersinn, wirkende Kraftkomponente aus. Dadurch kommt es zu einer drehzahlabhängigen, fliehkraftgeregelten Vorspannung der Dichtlippe 14, bei der die Abstützkraft der Dichtlippe 14 im Bereich der Dichtkante 17 synchron zum Drehzahlanstieg abnimmt. Die Dichtlippe 14 weist weiterhin im Bereich der Dichtkante 17 eine Entlüftungsnut 26 auf, die einen wirksamen Druckausgleich zwischen dem Einbauraum 6 und der äußeren Umgebung der Atmosphäre des Wälzlagers 2 sicherstellt.

### Bezugszahlen

- 1: Abdichtung
- 2: Wälzlager
- 3: Dichtscheibe
- 4: Ringnut
- 5: Lagerring (außen)
- 6: Einbauraum
- 7: Wälzkörperkäfig
- 8: Wälzkörper
- 9: Lagerring (innen)
- 10: Armierung
- 11: Bord
- 12: Schenkel
- 13: Dichtlippenfuß
- 14: Dichtlippe
- 15: Dichtlippe
- 16: Freistich
- 17: Dichtkante
- 18: Wandung
- 19: Wandung
- 20: Innenseite
- 21: Abschnitt
- 22: Stirnseite
- 23: Stirnseite
- 24: Wulst
- 25: Massenschwerpunkt
- 26: Entlüftungsnut
- a: Abstandsmaß (zwischen Dichtlippe 15 und Wandung 19)
- b: axialer Versatz (zwischen der Stirnseite 23 der Dichtscheibe 3 und der Dicht- kante 17)
- c: Abstandsmaß (zwischen den Dichtlippen 14, 15)
- D₁: Schulterdurchmesser (innerer Lagerring 9)
- D₂: Innendurchmesser (Dichtlippe 15)
- D₃: Durchmesser von Abschnitt 21 (zwischen Freistich 16 und Stirnseite 22 des Lagerrings 9)

## Patentansprüche

1. Wälzlager-Abdichtung, umfassend eine einem äußeren Lagerring (5) eines Wälzlagers (2) zugeordnete, umlaufende, elastische, eine Armierung (10) aufweisende Dichtscheibe (3), die formschlüssig in einer Aufnahme oder einer Ringnut (4) lagefixiert ist, und die Dichtscheibe (3) mit einer biegeweichen Dichtung in einen Freistich (16) eines inneren Lagerrings (9) eingreift, wobei eine Dichtlippe (14) der Dichtung mittels einer Dichtkante (17) an einer äußeren Wandung (18) axial abgestützt ist, und eine zweite Dichtlippe (15) der inneren Wandung (9) des Freistichs (16) spielbehaftet zugeordnet ist, **dadurch gekennzeichnet, dass** die erste Dichtlippe (14) an der zur zweiten Dichtlippe (15) gewandten Seite außenseitig eine Wulst (24) aufweist und in einer Einbaulage der Abdichtung (1) ein Massenschwerpunkt (25) der ersten Dichtlippe (14) zu einer von der Dichtscheibe (3) bestimmten Stützlinie versetzt ist,.

2. Wälzlager-Abdichtung nach Anspruch 1, bei der eine Rotation des Wälzlagers (2) eine in dem Massenschwemunkt (25) angreifende Fliehkraft eine im Uhrzeigersinn wirkende Kraftkomponente auslöst.

3. Wälzlager-Abdichtung nach Anspruch 1, bei der ein Schulterdurchmesser (D₁) des inneren Lagerrings (9) einen Innendurchmesser (D₂) der inneren Dichtlippe (15) übertrifft.

4. Wälzlager-Abdichtung nach Anspruch 3, bei der ein Abstandsmaß (a) zwischen der inneren Wandung (19) des Freistichs (16) und einem freien Ende der zweiten Dichtlippe (15) so ausgelegt ist, dass dieses auch bei einer maximalen Drehzahl des Wälzlagers (2) ein Abstandsmaß (a) > 0 sicherstellt.

5. Wälzlager-Abdichtung nach Anspruch 1, wobei die erste und die zweite Dichtlippe (14, 15) von einem gemeinsamen Dichtlippenfuß (13) der Dichtscheibe (13) ausgehend gestaltet sind.

6. Wälzlager-Abdichtung nach Anspruch 1, wobei in einer Einbaulage beider Dichtlippen (14, 15) sich ein axialer Versatz (b) zwischen einer Stirnseite (23) der Dichtscheibe (3) und der Dichtkante (17) der ersten Dichtlippe (14) einstellt.

7. Wälzlager-Abdichtung nach Anspruch 1, bei dem die zweite schräg geneigt zu der inneren Wandung (19) ausgerichtete, als ein Dichtungssporn gestaltete Dichtlippe (15) mit einem Abstandsmaß (c) axial versetzt zu der ersten Dichtlippe (14) angeordnet ist.

8. Wälzlager-Abdichtung nach Anspruch 1, deren Freistich (16) in dem inneren Lagerring (9) unterschiedliche Wandurtgshöhen aufweist, wobei die von dem Schulterdurchmesser (D₁) des Lagerrings (9) definierte Höhe der inneren Wandung (19) das Maß von dem Durchmesser (D₃) des Lagerrings (9) im Bereich zwischen dem Freistich (16) und der Stirnseite (22) übertrifft und weiterhin den Innendurchmesser (D₂) der zweiten Dichtlippe (15).

9. Wälzlager-Abdichtung nach Anspruch 1, wobei die erste Dichtlippe (14) im Bereich der Dichtkanten (17) mit zumindest einer Entlüftungsnut (26) versehen ist.

10. Wälzlager-Abdichtung nach Anspruch 9, deren Entlüftungsnut (26) radial oder geneigt verlaufend ausgerichtet ist.

11. Wälzlager-Abdichtung nach Anspruch 1, die für ein Wälzlager (2) vorgesehen ist, das in einer Spannrolle oder einer Umlenkrolle eines Spannsystems eingesetzt ist, mit dem ein Zugmittel eines Zugmitteltrieb vorgespannt wird.

12. Wälzlager-Abdichtung nach Anspruch 11, wobei der Aufbau der Spannrolle oder Umlenkrolle eine das Wälzlager umschließende Laufscheibe umfasst, die gleichzeitig die Funktion eines äußeren umlaufenden Lagerrings übernimmt.

13. Wälzlager-Abdichtung nach Anspruch 11, bei dem die Spannrolle oder Umlenkrolle einen drehstarr angeordneten Aufnahmebolzen oder Tragkörper für das Wälzlager einschließt, der gleichzeitig die Funktion eines inneren, drehstarren Lagerrings einschließt.

14. Wälzlager-Abdichtung nach Anspruch 1, wobei die scheibenartig ausgebildete Armierung (10) der Dichtscheibe (3) zumindest einseitig von einem elastischen Dichtwerkstoff der Abdichtung (1) umspritzt ist und die Armierung (10) außenseitig einen abgewinkelten Bord (11) sowie innenseitig einen in Richtung des Freistichs (16) schräg geneigten Schenkel (12) bildet.

## Claims

1. Rolling-contact bearing sealing arrangement, comprising an elastic sealing disk (3) running around and assigned to an outer bearing ring (5) of a rolling-contact bearing (2), having a reinforcement (10) and positionally fixed with positive engagement in a receptacle or an annular groove (4), and the sealing disk (3) engages with a flexible seal in a recess (16) of an inner bearing ring (9), a sealing lip (14) of the sealing being supported axially by means of a sealing edge (17) on an outer wall (18), and a second sealing lip (15) being assigned to the inner wall (19) of the recess (16) with play, **characterized in that** the first sealing lip (14) has on the outside, on the side facing the second sealing lip (15), a bead (24) and, in a fitted position of the sealing arrangement (1), a centre of mass (25) of the first sealing lip (14) is offset in relation to a supporting line determined by the sealing disk (3).

2. Rolling-contact bearing sealing arrangement according to Claim 1, in which, during rotation of the rolling-contact bearing (2), a centrifugal force acting at the centre of mass (25) initiates a force component acting in the clockwise direction.

3. Rolling-contact bearing sealing arrangement according to Claim 1, in which a shoulder diameter (D₁) of the inner bearing ring (9) exceeds an inside diameter (D₂) of the inner sealing lip (15).

4. Rolling-contact bearing sealing arrangement according to Claim 3, in which a distance (a) between the inner wall (19) of the recess (16) and a free end of the second sealing lip (15) is designed in such a way that, even with a maximum rotational speed of the rolling-contact bearing (2), it ensures a distance (a) > 0.

5. Rolling-contact bearing sealing arrangement according to Claim 1, the first and second sealing lips (14, 15) being made to extend from a common sealing lip root (13) of the sealing disk (3).

6. Rolling-contact bearing sealing arrangement according to Claim 1, an axial offset (b) between an end face (23) of the sealing disk (3) and the sealing edge (17) of the first sealing lip (14) being obtained in a fitted position of the two sealing lips (14, 15).

7. Rolling-contact bearing sealing arrangement according to Claim 1, in which the second sealing lip (15), obliquely inclined in relation to the inner wall (19) and designed as a toe wall, is arranged axially offset in relation to the first sealing lip (14) by a distance (c).

8. Rolling-contact bearing sealing arrangement according to Claim 1, the recess (16) of which in the inner bearing ring (9) has walls of different heights, the height of the inner wall (19), defined by the shoulder diameter (D₁) of the bearing ring (9), exceeding the size of the diameter (D₃) of the bearing ring (9) in the region between the recess (16) and the end face (22) and also the inside diameter (D₂) of the second sealing lip (15).

9. Rolling-contact bearing sealing arrangement according to Claim 1, the first sealing lip (14) being provided with at least one venting groove (26) in the region of the sealing edge (17).

10. Rolling-contact bearing sealing arrangement according to Claim 9, the venting groove (26) of which is made to extend in a radial or inclined manner.

11. Rolling-contact bearing sealing arrangement according to Claim 1, which is intended for a rolling-contact bearing (2) that is used in a tensioning roller or a deflecting roller of a tensioning system by which a belt or the like of a belt, chain or similar drive is pretensioned.

12. Rolling-contact bearing sealing arrangement according to Claim 11, the construction of the tensioning roller or deflecting roller comprising a running disk which encloses the rolling-contact bearing and at the same time undertakes the function of an outer peripheral bearing ring.

13. Rolling-contact bearing sealing arrangement according to Claim 11, in which the tensioning roller or deflecting roller includes a rotationally fixed locating pin or carrying body for the rolling-contact bearing which at the same time includes the function of an inner, rotationally fixed bearing ring.

14. Rolling-contact bearing sealing arrangement according to Claim 1, the reinforcement (10), formed in the manner of a disk, of the sealing disk (3) being encapsulated at least on one side by an elastic sealing material of the sealing arrangement (1) and the reinforcement (10) forming on the outside an angled-away flange (11) and on the inside a leg (12) inclined obliquely in the direction of the recess (16).

## Revendications

1. Joint pour palier à roulement, comprenant une rondelle d'étanchéité (3) périphérique, élastique, présentant une armature (10) et associée à une bague de roulement extérieure (5) d'un palier à roulement (2), qui est fixée en position par emboîtement dans un logement ou une rainure annulaire (4) et la rondelle d'étanchéité (3) s'engage en un joint d'étanchéité souple dans une gorge (16) d'une bague de roulement intérieure (9), dans lequel une lèvre d'étanchéité (14) du joint est appuyée axialement sur une paroi extérieure (18) au moyen d'une arête d'étanchéité (17), et une deuxième lèvre d'étanchéité (15) est associée avec du jeu à la paroi intérieure (19) de la gorge (16), **caractérisé en ce que** la première lèvre d'étanchéité (14) présente extérieurement un bourrelet (24) sur le côté tourné vers la deuxième lèvre d'étanchéité (15) et, dans une position de montage du joint (1), un centre de gravité massique (25) de la première lèvre d'étanchéité (14) est déplacé vers une ligne d'appui déterminée par la rondelle d'étanchéité (3).

2. Joint pour palier à roulement selon la revendication 1, dans lequel, lors de rotation du palier à roulement (2), une force centrifuge appliquée au centre de gravité massique (25) provoque une composante de force agissant dans le sens horaire.

3. Joint pour palier à roulement selon la revendication 1, dans lequel un diamètre d'épaulement (D₁) de la bague de roulement intérieure (9) dépasse un diamètre intérieur (D₂) de la lèvre d'étanchéité intérieure (15).

4. Joint pour palier à roulement selon la revendication 3, dans lequel une mesure d'écartement (a) entre la paroi intérieure (19) de la gorge (16) et une extrémité libre de la deuxième lèvre d'étanchéité (15) est conçue de façon à assurer une mesure d'écartement (a) > 0 même à une vitesse de rotation maximale du palier à roulement (2).

5. Joint pour palier à roulement selon la revendication 1, dans lequel la première et la deuxième lèvres d'étanchéité (14, 15) sont réalisées à partir d'un pied de lèvres d'étanchéité commun (13) de la rondelle d'étanchéité (3).

6. Joint pour palier à roulement selon la revendication 1, dans lequel, dans une position de montage des deux lèvres d'étanchéité (14, 15), il s'établit un décalage (b) entre une face frontale (23) de la rondelle d'étanchéité (3) et l'arête d'étanchéité (17) de la première lèvre d'étanchéité (14).

7. Joint pour palier à roulement selon la revendication 1, dans lequel la deuxième lèvre d'étanchéité (15) réalisée en forme d'éperon d'étanchéité, orientée en oblique vers la paroi intérieure (19), est agencée avec un décalage axial d'une mesure d'écartement (c) par rapport à la première lèvre d'étanchéité (14).

8. Joint pour palier à roulement selon la revendication 1, dont la gorge (16) dans la bague de roulement intérieure (9) présente des hauteurs de paroi différentes, dans lequel la hauteur de la paroi intérieure (19) définie par le diamètre d'épaulement (D₁) de la bague de roulement (9) dépasse la mesure du diamètre (D₃) de la bague de roulement (9) dans la région située entre la gorge (16) et la face frontale (22) et en outre le diamètre intérieur (D₂) de la deuxième lèvre d'étanchéité (15).

9. Joint pour palier à roulement selon la revendication 1, dans lequel la première lèvre d'étanchéité (14) est pourvue d'au moins une rainure de purge d'air (26) dans la région de l'arête d'étanchéité (17).

10. Joint pour palier à roulement selon la revendication 9, dont la rainure de purge d'air (26) est orientée en direction radiale ou oblique.

11. Joint pour palier à roulement selon la revendication 1, qui est prévu pour un palier à roulement (2), qui est utilisé dans un rouleau de tension ou dans un rouleau de déviation d'un système de tension, avec lequel un moyen de traction d'un mécanisme de traction est précontraint.

12. Joint pour palier à roulement selon la revendication 11, dans lequel la structure du rouleau de tension ou du rouleau de déviation comprend une poulie tournante entourant le palier à roulement, et qui reprend en même temps la fonction d'une bague de roulement extérieure rotative.

13. Joint pour palier à roulement selon la revendication 11, dans lequel le rouleau de tension ou le rouleau de déviation comprend un pivot de réception ou un corps de support calé en rotation pour le palier à roulement, qui assume en même temps la fonction d'une bague de roulement intérieure calée en rotation.

14. Joint pour palier à roulement selon la revendication 1, dans lequel l'armature (10) réalisée en forme de rondelle de la rondelle d'étanchéité (3) est enrobée au moins sur un côté par une matière d'étanchéité élastique du joint (1) et l'armature (10) forme extérieurement un bord coudé (11) ainsi qu'intérieurement une branche (12) inclinée en oblique en direction de la gorge (16).
